# EUROPEAN PATENT APPLICATION

(11) **EP 0 997 441 A2**
(43) Date of publication of application: **03.05.2000**
(21) Application number: 99203492.6
(22) Date of filing: 25.10.1999
(51) Int. Cl.: C02F 3/12

(54) **Procedure and apparatus for the treatment of domestic sewage under extended aeration**

(30) Priority: 28.10.1998 IT MI982308
(71) Applicant: Neglia, Stefano, 57053 Marciana Marina, Isola d'Elba (Livorno) (IT)
(72) Inventor: Neglia, Stefano, 57053 Marciana Marina, Isola d'Elba (Livorno) (IT)
(74) Representative: Cioni, Carlo

(57) **Abstract**

Procedure and devices for the treatment of sewage, deriving from small isolated communities or residences, comprise:
a) introducing the sewage into an annular zone, delimited by a cylindrical inside wall consisting of a relatively large mesh screen, preventing the direct passage of the coarse organic material into the inside aerated zone of the tank, the zone and the cylindrical one, inside, communicating in the annular lower part so that the coarse organic material of higher specific gravity is deposited on the common bottom of the two zones;
b) blowing air into the lower section of the inside cylindrical zone helps the bacterial growth and the aerobic attack of the material organic and allows the material to rise up because the action of the bacterial digestion and the absorption of the fermentation gases reduce its specific weight;
c) maintaining the sewage in concentric zones, defined by two screens, one of average mesh size, the other of small mesh size, preventing the exit of the solid organic material of dimensions greater than the mesh until this solid organic material, due to the attack of the aerobic micro-organisms, under extended aeration, has reached lower dimensions than those of the smaller mesh screen, the material subjected to bacterial digestion being maintained inside the upper annular zones under agitation by air blown into the zone defined by the two screens in order to help the growth of the bacterial flora.
d) The invention allowing two important results to be achieved: 1) to convert every biodegradable organic matter into cell tissue, i.e. in micro-organisms with absence of an excess of sludge at the bottom of the tank; 2) no excess of micro-organisms (or of sludge) accumulates at the bottom of the batch reactor as, when there is no more food, the bacteria are forced to metabolise their own protoplasm and die, thus furnishing food for other living cells.

## Description

The present invention refers to a device for the treatment of sewage of domestic origin by means of aerobic digestion. The invention also refers to a procedure using the device enabling the treatment of the sewage with the associated production of water, which can be used for such purposes as irrigation, without production of an excess of sludge.

Systems for the collection and treatment of domestic sewage have been known for a long time.

These systems generally use buried tanks where the sewage and the solid residues are retained for a certain period substantially in the absence of air so that, after an initial period of aerobic digestion, which consumes the oxygen still present, a form of anaerobic digestion of the organic materials is established and they decompose. This treatment produces a liquid effluent on the one hand, but also involves the production of notable quantities of sludge that are difficult to dispose of the sludge is of two types depending on the solid materials from which it derives: heavy sludge originating from materials with specific gravity higher than that of water (paper, plastic), which is deposited on the bottom and light sludge, deriving from solids with lower specific gravity than that of water, which remain on the surface and, aggregating, form compact layers that isolate the sewage, known also as wastewater, from any contact with the oxygen of the air, and that prevent it from being attacked by the micro-organisms. The drawbacks resulting from disposing of appreciable quantities of sludge are particularly important when the sewage collection originates from isolated residences or groups of residences which are not connected to conventional gravity flow sewers with centralised treatment.

It would, therefore, be desirable to have access to procedures and devices that allow the sewage deriving from isolated residences or communities, to be treated without the production of sludge and produce liquid effluents that can be transformed by simple processes into water usable for irrigation.

In the Italian Patent Application M197A002445, deposited October 31, 1997 by the same applicant, a procedure and a device are proposed for the treatment of sewage by means of attacking the solid organic material in the sewage with substantially aerobic micro-organisms. The treatment is substantially in two stages:
in the first stage, the sewage admitted is allowed to sediment, leaving the heavier components on the bottom and the lighter components on the surface from where they pass, over an adjustable effluent weir, into the second stage where they, being in contact with blown air, are continuously agitated. The material deposited on the bottom in the first stage is slowly attacked by facultative bacteria, capable of breaking biodegradable organic matter by removing the molecular oxygen in a respiratory process. The gases produced by respiration are adsorbed by organic fragments with the effect of reducing their relative specific gravity. This allows them to rise to the surface and to be subjected, in the second stage, to the same aerobic treatment as the lighter organic components. The treated sewage can outflow from the said second stage via a screen which allows only that material to pass through which is smaller than the mesh size.

The said procedure while treating the sewage satisfactorily in terms of the quality, compared to previous treatments, does not guarantee either good speed or reproducibility of the same treatment.

The present invention relates to a process and to a device that allows sewage deriving from isolated residences or communities to be treated at high speed, with good reliability and reproducibility of the same treatment.

The procedure according to the present invention presents multiple treatment zones of the sewage.

In a first phase, the sewage admitted is fed into an annular zone delimited by a cylindrical internal grid consisting of a relatively large-mesh screen that prevents the direct passage of the coarse organic material into the internal aerated zone of the tank. Instead of an annular screen, a substantially semi-cylindrical sheet-metal protection could be used to prevent the direct movement. The annular and the internal cylindrical zones communicate in the lower part so that the coarse organic material of higher specific gravity is deposited on the common bottom of the two zones. Air is blown above the lower section of the internal cylindrical zone and this helps facultative bacterial growth below the air diffuser and aerobic bacterial growth above it. The facultative bacterial attack causes the breakage and comminution of the organic material with a higher specific gravity and its transformation into floating material because of the absorption of the fermentation gases. The sewage thus treated on its way toward the exit arrives in the upper compartment where it is forced to pass in succession though two annular concentric zones defined by two screens, the first one of average mesh size, the other of small mesh size, which prevent the passage toward the exit of solid organic material of dimensions greater than the mesh size until this solid organic material, because of the attack of the aerobic micro-organisms under extended aeration has reached a size smaller than the mesh size. The material subjected to bacterial digestion is also maintained in agitation by the blast of air inside the annular zones defined by the two screens.

At the end the treated sewage is unloaded through a waste weir exit that prevents the development of preferential pathways inside the apparatus.

The subdivision of the aerobic digestion treatment procedure into multiple substantially separate stages according to the present invention allows the sewage to be maintained under extended aeration which involves considerable beneficial effects.

Extended aeration increases the bacterial population at the expense of the digested bacterial, avoids the formation of excess sludge in the digester (which eliminates the need for purging operations) and allows lower tank volumes for the same quantity of sewage treated. In this case, excess sludge in the processes of disposal of solids refers to that part of solid material not consisting substantially of bacterial colonies.

The liquid obtained, collected in a wastewater trap, could be sent to the centralised treating tank, i.e. to a batch reactor or it could be further treated by passing it through a trickling filter consisting of a pebble filter-bed.

Preferably in the case where there is a water shortage, the liquid from the wastewater trap is subject to further aerobic digestion in the known blown- air reactors of the "batch reactor type" to give water that could be used, after further treatment, for irrigation.

Furthermore, since the procedure according to the present invention comprises the treatment in the biological tank and the further digestion in the batch reactor, both treatments being without excess of sludge, the general management of the system comprising the biological treatment and the irrigation with treated water can be completely automated.

The procedure for the treatment of sewage according to the present invention may be realised at low cost with a device which also forms an object of the present invention and which consists of a tank in concrete, stainless steel, plastic or other sub stance commonly used in the construction of septic or Imhoff tanks, the said tank being substantially cylindrical and comprising in its interior an annular compartment defined by a substantially large-mesh screen cylinder open at both ends, arranged in the lower part of the tank in such a way that the lower edge of the said cylinder is at a level above the bottom of the tank and the upper edge of the said cylinder is above the level of a hollow disk perpendicular to the axis of the tank and solid with the internal side wall of the same; on the hollow disk are placed two or more cylindrical screens concentric with the walls of the tank of progressively diminishing mesh size delimiting so two or more annular zones.

Devices for the blasting of air into the sewage are arranged in the lower internal zone and in one or more of the upper annular zones. An effluent weir is arranged in the upper part of the tank at the same level as the normal water surface in the tank The biological tank can be built in many ways. For example by assembling on-site pre-built superimposable concrete rings.

According to an alternative realisation of the present invention the fresh sewage could be kept separate from the aerated zone by means of a protection consisting of a semi-cylinder of metal plate disposed in front of the entry of the sewage.

According to a further realisation, the tank could be provided with means of thermal insulation in order to maintain a relatively constant temperature independent of the ambient temperature.

To help the microbial digestion, the sludge at the bottom of the tank can be heated by circulating warm water in a plastic coiled tube. The hot water for the heating could be advantageously supplied from solar panels.

The influent sewage enters the lower part of the tank just below the hollow disk. This type of feed helps the deposition of the heavier materials in the lower part and doesn't hamper the installation and the operation of the means provided for the agitation of the liquid in the upper annular compartment. It is necessary however to blow air, a few minutes per day, also in the lower annular zone, outside the lower screen, in order to prevent the establishment of anoxic environment and let organic fragments lighter than water float to the surface. The floating of the organic fragments is indeed hampered by the return circulation of the liquid caused by the air blown in the central diffuser The tank is covered with a disk of material that should be light, but sufficiently strong to withstand the weight of two heavy persons. The effluent exit-duct is placed below the adjustable weirs and the effluent is normally conveyed, in summer time, to a batch reactor for a further biological treatment or alternatively to a trickling filter.

The device according to the present invention lends itself advantageously to a seasonal employment, for instance in places of summer vacation located in semiarid zones, where the shortage of water for irrigation is particularly felt.

The device which is the object of the present invention and its operation with result more clear from the description that follows with reference to the enclosed figures which illustrate a particularly advantageous embodiment of invention. It is altogether evident that the embodiments illustrated in the figures must not be interpreted as limiting the scope of the invention:
- figure 1 is a view in transverse section of a device that realises the procedure of the present invention;
- figures 1A, 1B and 1C are views in section of the device, respectively according to the planes A-A, B-B and C-C;
- figure 1D is a view from above and from the inside of the device position;
- figure 2 shows the application of the device in an integrated system automated for the production of water for irrigation.

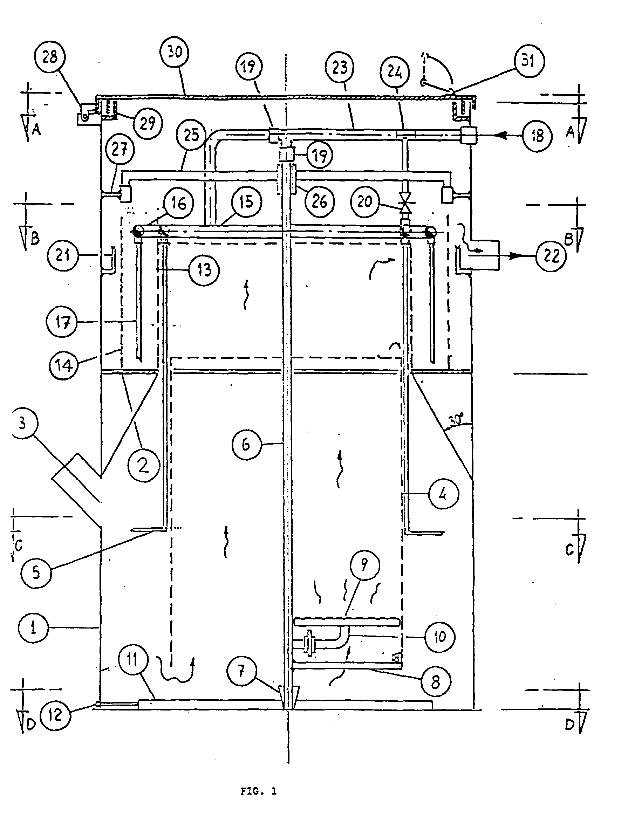

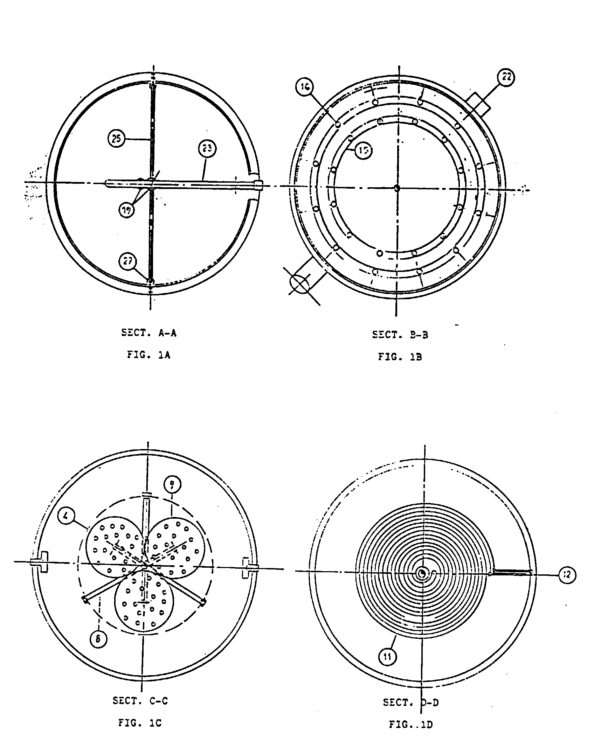

The device in figure 1 comprises a tank indicated as a whole as 1, made of fibreglass or of a metal resistant to the attacks of corrosive liquids. In the case in which a concrete tank 15 preferred, it could be realised by superimposing in situ multiple concrete rings. The tank 1 is closed by the cover 30, provided with a handle 31 and hinged to the element 28 flexed to the external wall of the tank, who se gas seal Is insured by a hydraulic seal 29, for example. On the inside wall of the tank 1 is flexed a hollow disk 2, that divides the tank into two compartments, lower and upper. The sewage enters the tank 1 through an entry duct 3 at a lower level than that of the disk 2. A cylindrical screen 4, open at the extremities, concentric with the tank and consisting of large-mesh screen in stainless steel or some other material resistant to microbial attack and of sufficient mechanical resistance, Is mounted on the inside of tank 1 by means of three stirrups 8 welded to the air-feed pipe 6, connected to the diffusers 9 by means of the joint 10, forcing the solid with dimensions greater than those of the mesh of the screen 4, to remain outside cylinder 4 and to settle on the bottom of the tank in order to be *so* subjected to bacterial digestion. The aerobic digestion needs air to be blown, for a few minutes per day, in the annular zone outside screen 4 by means of a series of small stainless steel pipes 5. In this way it is possible also to achieve a uniform distribution in the tank of the solid sewage. The air-feed pipe 6 to the diffusers 9 is centred by means of a conic housing 7 on the bottom of the tank 1. 11 is a serpentine pipeline, with external attachments 12 that could be used for a possible heating of the sewage, by means of the circulation of warm water heated with solar panels (not shown), for the purpose of increasing the speed of the process of bacterial digestion.

The details of the positioning of the support stirrups of the screen 4, like those of the support joints of the diffusers 9 are visible in the Figure 1C. The positioning of the serpentine 11 and of the related attachments 12 is illustrated in the Figure 1D.

The continuous aeration of the zone inside the screen 4 maintains a constant presence of oxygen above the diffuser and a weak presence of oxygen below (the oxygen content decreases moving towards the bottom of the tank 1). Therefore the environment in the lower part of the biological tank becomes anoxic and favourable to the development of facultative bacteria capable of comminuting organic matter, such as paper and cotton, by subtracting molecular oxygen. Absorption of the gaseous products of fermentation by the comminuted pieces let them float and enter the circuit of the aerated zone where they continue to be subjected to aerobic digestion until their dimensions are reduced to a value smaller than that of the mesh of the screen 13, which, being flexed in its lower part to the hollow disk 2, defines an annular chamber.

The elevated concentration of organic material in the compartment aerated by the diffusers creates the optimal conditions for bacterial growth, i.e. a lot of food and few bacteria (the majority of bacteria population goes out with the effluent.). Once the dimensions of the solid are lower than those of the mesh of the screen 13 they can enter the first annular chamber where the aerobic bacterial attack continues, the presence of oxygen being guaranteed by the additional diffusers of air 17 connected to an air distributing ring 16. A second finer-mesh screen 14 holds back the particles in the annular chamber until these have reached the dimensions that allow them to pass through the screen 14, also fixed in its lower part to the hollow disk 2, and enter the second upper annular chamber that communicates with the exit duct 22 over the wastewater weir 21 that, as pointed out above, prevents channels of preferential flow being established. The positioning of the aerators 17 is better illustrated in the figure 1B. The aeration of the upper annular zone (inside screens 13 - 14) prevents the formation of gelatinous sludge, characteristic of the fermentation in anoxic conditions (that would hinder the normal outflow of the treated sewage) and also keeps aerated the annular zone inside screen 14 and the tank wall 1.

The air circuit in the tank is substantially simple. The air supplied by the blower 18 though the main pipe 23 continuously feeds the central diffuser 9 and the series of the metal small pipes 17 by means of the Tee 24 and of the partition valve 20. Once per day it Is necessary to invert the liquid movement inside the tank by sending, by means of two electrovalves 19, the same volume of air to the series of small pipes 5 instead of to the diffuser 9. A commutation time of few minutes Is sufficient to release the amount of floating material accumulated in the annular zone outside the screen 4. Two annular ducts 15 and 16 distribute air, respectively, to a first series of small pipes 5, outside screen 4, and to a second series between screens 13 and 14. The system adopted to centre the air-feed pipe 6 to the diffusers 9 consists of three arms 25 fixed to the central collar 26 that is positioned on three guides 27 fixed to the wall of the tank 1. This Is better illustrated in the Figure 1A.

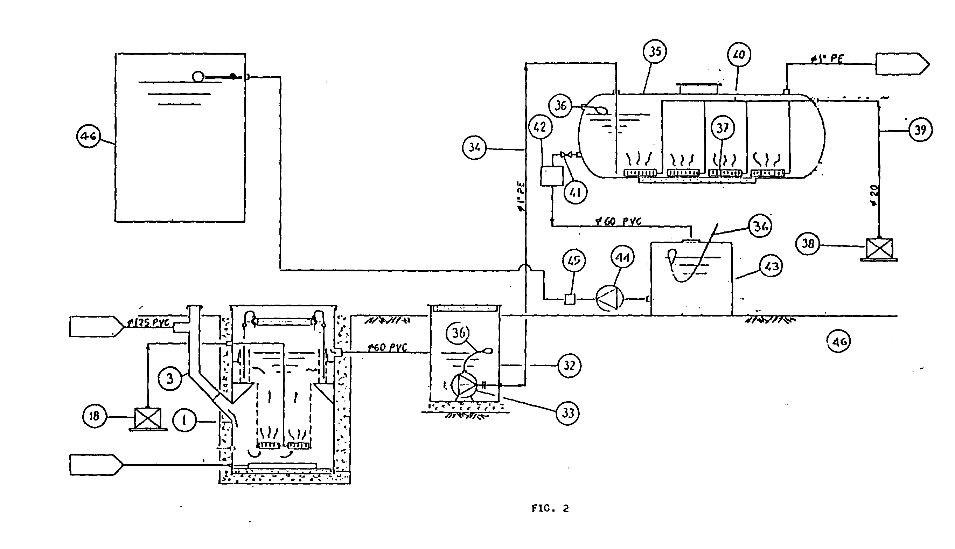

The figure 2 illustrates an embodiment of the biological tank according to the invention in association with an activated-sludge process carried out in a "batch reactor". In this embodiment the wastewater deriving from the trap 32, which receives the effluent from the tank 1 (see figure 2), is fed by means of a pump 33, though the line 34 to the reactor 36 until the latter is filled. The reactor is provided with a level control device 35, for instance a floating electrical a witch, that interrupts the operation of the pump 33 when the sewage has reached the desired level in the reactor. The reactor 36 is loaded and unloaded periodically, for instance with daily cycle, according to demand. Preferably the reactor consists of a plastic reservoir that could be covered with a thermal insulating jacket to reduce heat loss. The reactor is also fitted with air diffusers 37 connected to the blower 38 though the duct 39 and the manifold 40. The extended aeration, regulated by a timing device not shown, causes the solid material in suspension to be digested by the aerobic bacterial colonies, after which the digestion continues at the expense of the same micro-organisms (cannibalism effect) with an increase of the temperature of the aerated mass therefore eliminating production of excess sludge. After the programmed period, the blowing of air is interrupted and the suspended solid in the aerated mixture separates by settlement on the bottom. At the expiry of the time scheduled for the settlement of the solid, the liquid is decanted though the valve 41, located at a distance from the bottom of the reservoir equal to around 1/3 of the diameter, and poured into a sand filter 42 and therefore into the underlying tank 43. From here the treated water is withdrawn by the pump 44 and sent (though the unidirectional valve 46) to a larger tank 45 for the total removal of the bacteria charge. Finally the treated water can be used for irrigation. The treatment process illustrated in fig. 2 can be customised either to treat the effluent on-site or to share the water treated in a bigger batch reactor with neighbours or to discharge it into a municipal sewer. In case the owner decides to treat the effluent for his own needs, all components can be hidden underground in a pre-fabricated concrete room.

## Claims

1. Procedure for the treatment of sewage deriving from small isolated communities or residences comprises:
a) Introducing the sewage into an annular zone delimited by the cylindrical wall of a large-mesh size screen that prevents the direct passage of the coarse organic material to the inside aerated zone of A tank; the annular zone and the cylindrical one inside communicating between them in the lower part so that the coarse organic material of higher specific gravity is deposited on the common bottom of the two zones;
b) Blowing air into a diffuser positioned in the lower section of the cylindrical inside zone creating an aerobic environment in the zone above the diffuser and an anoxic environment in the underlying zone, the latter helping the growth of facultative bacteria, who se attack on the organic material causes the absorption of the fermentation gases on the surface of the comminuted particles (and relative decrease of their specific weight) and their subsequent rise to the surface;
c) Maintaining the sewage treated successively in concentric zones defined by two screens, the first one with average mesh size, the second with small mesh size, preventing the passage toward the exit of the solid organic material of dimensions greater than the mesh of the screen until the biological comminution of the organic material (under extended aeration) reaches dimensions lower than those of the smaller screen mesh size, the organic material being continuously aerated by air blown into the zones defined by the two upper screens.

2. Procedure for the treatment of sewage deriving from isolated small community or residences according to the claim 1 characterised by the fact that in the stage a) a substantially semi-cylindrical sheet metal protection can be used (to prevent the direct passage of the coarse organic material).

3. Procedure for the treatment of sewage deriving from small isolated communities or residences, according to the claims 1 or 2, characterised the fact that at the end of the treatment the liquid is unloaded through a wastewater weir exit that prevents preferential runs being set up inside the apparatus.

4. Procedure for the treatment of sewage deriving from small isolated communities or residences according to the claims from 1 to 3, characterised by the fact that the effluent could be sent to a centralised sewerage network and or it could be further treated, by being passed through an on-site trickling filter, consisting of a pebble filter-bed.

5. Procedure for the treatment of sewage deriving from small isolated communities or residences according to the claims 1 or 2 characterised by the fact that the effluent is subjected to further aerobic digestion in aerated reactors of the "batch reactor" type, without production of an excess of sludge, in order to obtain water that could be used, after removal of the bacterial charge, for irrigation.

6. Apparatus for the treatment of sewage deriving from small isolated communities, the main component of which being a tank of different materials as concrete, stainless steel, reinforced plastic or other material commonly used in biological tanks, the above said tank being a cylinder divided into a lower and upper compartments by a hollow disk solid with the wall of the tank; the lower compartment in turn being divided into an annular zone and a central zone by a suspended cylindrical screen with relatively large mesh, open at the two extremities, whose lower levels is above the bottom of the tank and whose upper level is above the hollow disk; the upper compartment in turn being divided into two annular zones and a central zone by two screens of different mesh size, the internal one of medium size, the external one of small size, both concentrically positioned on the hollow disk; aeration devices being positioned: the first in the central lower zone along the axis of the cylindrical tank, the second outside the screen with large mesh size and the third in the upper annular zone outside the screen with small mesh size; a wastewater weir being positioned concentrically to the tank wall, at a level a few centimetres lower than the upper extremity of the two screens and a few centimetres higher than the level of the effluent exit.

7. Apparatus for the treatment of sewage deriving from small isolated communities or residences according to the claim 6, characterised by the fact that the tank consists of multiple interconnected superimposed concrete cylinders that make transport and assembly easier.

8. Apparatus for the treatment of sewage deriving from small isolated communities or residences according to the claims 6 and 7, characterised by the fact that the annular compartment is realised by means of a protection consisting of a semi-cylindrical metal plate disposed in front of the entry of the sewage.

9. Apparatus for the treatment of sewage deriving from small isolated communities or residences according to the claims from 6 to 8, characterised by the fact that the tank is fitted with means of thermal insulation to maintain a relatively constant temperature independent of the ambient temperature.

10. Apparatus for the treatment of sewage deriving from small isolated communities or residences according to the claims from 6 to 9, characterised by the fact that, to help the microbial digestion, means, such as hot water serpentine or similar, are provided to heat the mass of the sewage, the hot water for the heating being advantageously provided by solar panels.

11. Apparatus for the treatment of sewage deriving from small isolated communities or residences according to the claims from 6 to 10, characterised by the fact that it is connected with a reactor for the further aerobic digestion in the presence of blown air for the production of treated water directly usable for irrigation.

12. Automatic system for the treatment of sewage deriving from small isolated communities or residences constituted by the complex biological tank and reactor according to the claim 11.
